# EUROPÄISCHE PATENTSCHRIFT

(11) **EP 2 356 365 B1**
(45) Veröffentlichungstag und Bekanntmachung des Hinweises auf die Patenterteilung: **19.06.2013**
(21) Anmeldenummer: 09744681.9
(22) Anmeldetag: 30.10.2009
(51) Int. Cl.: F16L 55/11

(54) **VERSCHLUSSVORRICHTUNG**
CLOSING DEVICE
DISPOSITIF DE FERMETURE

(30) Priorität: 12.11.2008 DE 102008056853
(43) Veröffentlichungstag der Anmeldung: 17.08.2011
(73) Patentinhaber: Continental Teves AG & Co. oHG, 60488 Frankfurt (DE)
(72) Erfinder: SCHULZ, Christian, 64560 Riedstadt (DE); VOSS, Christoph, 60435 Frankfurt am Main (DE); ZUTT, Ulrich, 65527 Niedernhausen (DE)
(86) Internationale Anmeldenummer: PCT/EP2009/064336
(87) Internationale Veröffentlichungsnummer: WO 2010/054936

(56) Entgegenhaltungen:
- DE-A1-102006 037 694
- JP-A- 2008 155 674
- US-A1- 2003 029 219
- US-A1- 2004 021 537
- US-A1- 2008 093 915
- US-A1- 2008 185 548
- US-B1- 6 244 295

## Beschreibung

Die Erfindung betrifft eine Verschlussvorrichtung zum Verschließen von druckmittelführenden Kanälen in einem Gehäuse, nach dem Oberbegriff des Anspruchs 1.

Aus der DE 44 39 059 A1 ist bereits eine Verschlussvorrichtung bekannt geworden, die aus einem in die Aufnahmebohrung eines Gehäuses eingepressten Schließkörper besteht. Der Schließkörper übernimmt die Funktion eines Verstemmstempels, so dass er entsprechend massiv und hinsichtlich seiner Oberflächenkontur äußerst präzise hergestellt werden muss, um einerseits die auf das Gehäuse wirksame hohe Einpresskraft zu übertragen und andererseits die gewünschte Dichtheit des Schließkörpers nach Beendigung der Verstemmoperation in der Aufnahmebohrung sicherzustellen.

Die gattungsbildende Schrift JP 2008 155674 A offenbart eine Verschlussvorrichtung nach dem Oberbegriff des Anspruchs 1 und somit eine Verschlussvorrichtung zum Verschließen von druckmittelführenden Kanälen in einem Gehäuse, bestehend aus einem rotationssymmetrischen Verschlusskörper, der an seinem Umfang eine Verstemmstelle aufweist, die als eine an einem Bund des Verschlusskörpers umlaufende Rippe ausgebildet ist, welche durch plastische Verdrängung des Gehäusewerkstoffs in eine an dem Bund umlaufende Kerbe im Anschluss an eine erste Bohrungsstufe in der Aufnahmebohrung ausgebildet ist. Die rippenförmige Verstemmstelle wird somit durch die Kontur der am Bund des Verschlusskörpers umlaufenden Kerbe begrenzt, sodass mittels eines zur Verdrängung des Gehäusewerkstoffs in die Kerbe vorgesehenen Verstemmstempels keinerlei Einfluss auf die Rippengröße und Rippenform zum Zwecke einer optimalen mechanischen Spannungsverteilung in der Verstemmstelle genommen werden kann.

Ferner ist aus US 2003/029219 A1 ein Verstemmkopf zur Verstemmung eines rotationssymmetrischen Verschlusskörpers in einem Gehäuse bekannt, wozu der Verstemmkopf eine auf den Verschlusskörper gerichtete Stirnfläche aufweist, die das Gehäuse im Bereich einer gestuften Bohrung überdeckt, wobei die Kontur der Stirnfläche eine Ausnehmung aufweist, die derart in Stufen abgeschrägt ist, dass das von dem Verstemmkopf beim horizontalen Absenken in die Ausnehmung verdrängte Gehäusevolumen nicht radial in Richtung auf den Verschlusskörper ausweichen kann, sondern vielmehr zu einer nach außen stufenweise konisch verlaufenden Rippe verdichtet wird.

Aus der US 2004/021537 A1 ist eine Verschlussvorrichtung zum Verschließen von druckmittelführenden Kanälen in einem Gehäuse bekannt, mit einem kegelförmigen Verstemmstempel, dessen Kontur die plastische Verformung des Gehäusewerkstoffs zu einer schmalen kegelförmigen Verstemmstelle zur Fixierung eines Verschlusskörpers im Gehäuse erzwingt, wobei die zur Abstützung des Verschlusskörpers im Gehäuse vorgesehene Reaktionsfläche zunächst vor dem Verstemmen kegelförmig nach innen geneigt ist, sodass infolge der geringen Auflagefläche des Verschlusskörpers an der geneigten Reaktionsfläche zwangsläufig unter der Wirkung des Verstemmstempels eine nachgiebige, plastische Mitverformung der Reaktionsfläche erfolgt.

Daher ist es die Aufgabe der vorliegenden Erfindung, eine Verschlussvorrichtung der eingangs genannten Art dahingehend zu verbessern, dass vorgenannte Nachteile vermieden werden, um mittels einer vergleichsweise einfachen und dennoch sicheren, flüssigkeitsdichten Verstemmoperation unter möglicht geringem Kraftaufwand einen möglichst einfach aufgebauten Verschlusskörper in der Aufnahmebohrung eines Gehäuses befestigen zu können.

Diese Aufgabe wird für eine Verschlussvorrichtung der eingangs genannten Art durch die kennzeichnenden Merkmale des Patentanspruchs 1 gelöst.

Weitere Merkmale und Vorteile der Erfindung gehen im Folgenden aus der Beschreibung mehrerer Zeichnungen hervor.

Es zeigen:
- Fig. 1: eine fertig verstemmte Verschlussvorrichtung in einer Teilansicht mit den erfindungswesentlichen Merkmalen,
- Fig.2: die Verschlussvorrichtung nach Figur 1 vor der plastischen Verformung des Gehäusewerkstoffs in Richtung auf den Verschlusskörper mit einem auf einer Zentrierkegelfläche des Gehäuses selbstzentrierend angeordneten Verstemmstempel,
- Figur 3: einen Längschnitt durch eine bevorzugte Ausführungsform des Verschlusskörpers als Ventilhülse zur Aufnahme von Bauteilen eines elektromagnetischen Ventiltriebs.

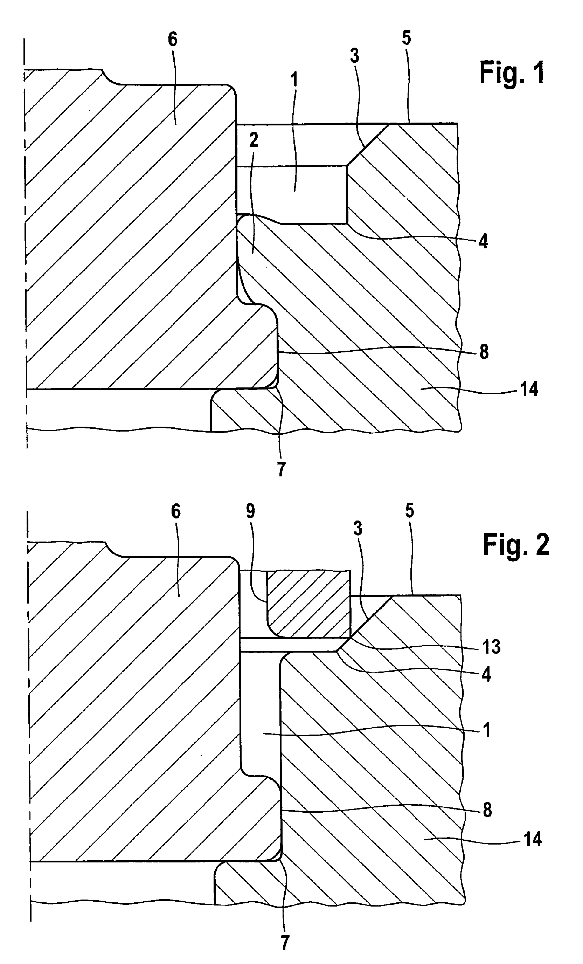

Die Fig. 1 zeigt in vergrößertem Maßstab im Längsschnitt eine Teilansicht einer Verschlussvorrichtung zum Verschließen von Hohlräumen, insbesondere druckmittelführenden Kanälen in einem Gehäuse 14, bestehend aus einem rotationssymmetrischen Verschlusskörper 6, der in einer Aufnahmebohrung 1 des blockförmigen Gehäuses 14 befestigt ist. Am Umfang des Verschlusskörpers 6 ist zu dessen Befestigung und Abdichtung im Gehäuse 14 eine Verstemmstelle 2 vorgesehenen, die infolge der plastischen Verdrängung von Gehäusewerkstoff den Verschlusskörper 6 im Gehäuse 14 unlösbar fixiert. Zur Fixierung weist die Aufnahmebohrung 1 zwischen der Verstemmstelle 2 und einer Zentrierkegelfläche 3 einen Übergangsbereich in Form einer Bohrungsstufe 4 auf, die durch die plastische Verdrängung des Gehäusewerkstoffs in die Aufnahmebohrung 1 gegenüber dem in Figur 2 gezeigten Ursprungszustand des Gehäuses 14 deutlich vertieft ist. Die Zentrierkegelfläche 3 grenzt als trichterförmige Anphasung unmittelbar an eine Außenkante 5 der Aufnahmebohrung 1 an und ist zur Ausbildung der Verstemmstelle 2 durch einen Verstemmstempel 9 abschnittweise in Richtung der Bohrungsstufe 4 plastisch mitverformt.

Zur Aufnahme einer durch den Verstemmstempel 9 erzeugten Verstemmkraft an einer quer zur Aufnahmebohrung 1 verlaufenden Reaktionsfläche ist der Verschlusskörper 6 in der Aufnahmebohrung 1 entsprechend abgestützt, wozu in einem axialen Abstand zur ersten Bohrungsstufe 4 eine weitere Bohrungsstufe 7 in der Aufnahmebohrung 1 vorgesehen ist, sodass die Aufnahmebohrung 1 mit zunehmender Tiefe einen abnehmenden Durchmesser aufweist. Der Verschlusskörper 6 weist zur Abstützung und Fixierung in der Aufnahmebohrung 1 einen Bund 8 auf, der zwischen der weiteren Bohrungsstufe 7 und der Verstemmstelle 2 form- und/oder kraftschlüssig vom verdrängten Gehäusewerkstoff umschlossen ist.

Die Verstemmstelle 2 ist somit als ein am Bund 8 des Verschlusskörpers 6 umlaufender Wulst ausgebildet, der infolge der plastischen Verdrängung des Gehäusewerkstoffs auf den Verschlusskörper 6 im Anschluss an die erste Bohrungsstufe 4 in der Aufnahmebohrung 1 ausgebildet ist. Dabei ist der Wulst durch die Kontur des hülsenförmigen Verstemmstempels 9 ausgebildet, der die Verdrängung des die Aufnahmebohrung 1 begrenzende Gehäusewerkstoff in Richtung auf den Bund 8 ermöglicht.

Die Figur 2 zeigt analog zu Figur 1 in vergrößertem Maßstab eine Teilansicht der Verschlussvorrichtung im Längsschnitt mit dem in der Aufnahmebohrung 1 eingesetzten Verschlusskörper 6 vor der Verstemmung des Gehäusewerkstoffs in Richtung auf den Bund 8, der zunächst an der unterhalb zur ersten Bohrungsstufe 4 in der Aufnahmebohrung 1 ausgebildeten weiteren Bohrungsstufe 7 lose anliegt, bevor zur Ausbildung der aus Figur 1 bekannten Verstemmstelle 2 der zwischen der Zentrierkegelfläche 3 und der weiteren Bohrungsstufe 7 gelegene Gehäusewerkstoff durch den hülsenförmigen Verstemmstempel 9 plastisch in Richtung auf den Bund 8 sowie in den zwischen dem Verschlusskörper 6 und dem Gehäuse 14 definierten Ringraum der Aufnahmebohrung 1 verdrängt wird.

Hierzu wird oberhalb der ersten Bohrungsstufe 4 der als Flachstempel ausgebildete Verstemmstempel 9 zunächst mit der Schneidkante 13 auf die Zentrierkegelfläche aufgesetzt, sodass bei exzentrischer Zuführung des Verstemmstempels 9 die Schneidkante 13 vor dem Einpressen in die Aufnahmebohrung 1 zunächst auf der Zentrierkegelfläche 3 selbstzentrierend gleitet. Nach der konzentrischen Ausrichtung auf der Zentrierkegelfläche 3 erfolgt durch Kraftsteigerung das Eindringen der am Außenumfang des Verstemmstempels 9 ausgebildeten Schneidkante 13 in den Gehäusewerkstoff und das Verdrängen des Gehäusewerkstoffs in Richtung auf den am Umfang des Verschlusskörpers 3 vorgesehenen Bund 8, mit der Besonderheit, dass infolge der Schneidwirkung der Schneidkante 13 in der Zentrierkegelfläche 3 zunächst die Zentrierkegelfläche 3 abschnittsweise in die Aufnahmebohrung 1 plastisch mitverformt wird, bis der hülsenförmige Verstemmstempel 9 mit seiner Ringfläche vollflächig auf der Ringfläche der ersten Bohrungsstufe 4 auftrifft und entsprechend der vollflächigen Auflagefläche des Verstemmstempels 9 den im Übergangsbereich zwischen beiden Bohrungsstufen 4, 7 befindliche Gehäusewerkstoff weiter in Richtung auf den Bund 8 plastisch verdrängt.

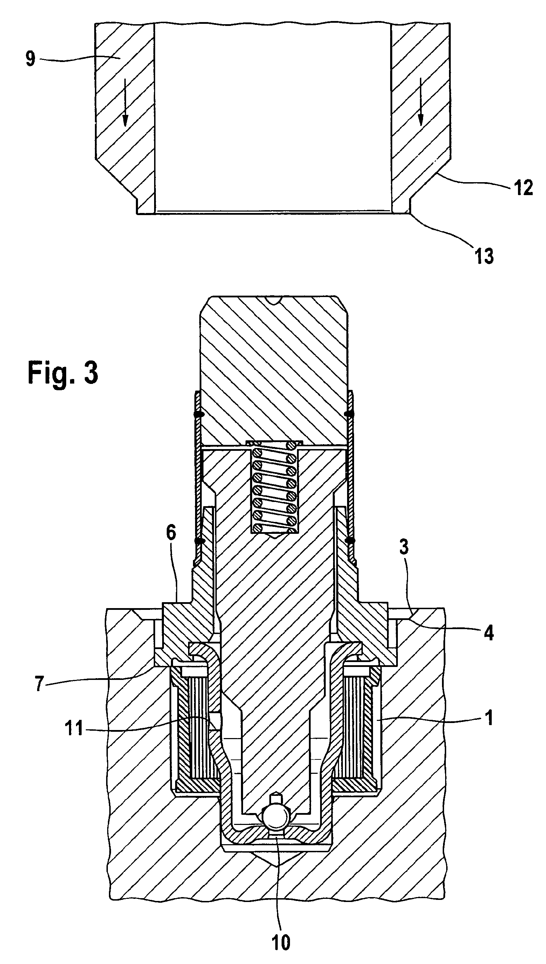

Die stetige Vorschubbewegung des Verstemmstempels 9 in Richtung der Aufnahmebohrung 1 wird beim Erreichen der Endposition des Verstemmstempels 9 in der Aufnahmebohrung 1 beendet, wozu entsprechend der Darstellung nach Figur 3 am Verstemmstempel 9 ein Endanschlag 12 vorgesehen ist, der beim Erreichen der Endposition des Verstemmstempels 9 an der Zentrierkegelfläche 3 anliegt.

Durch die selbsttätige konzentrische Ausrichtung des Verstemmstempels 9 und dem sich anschließenden Schneidprozess lässt sich der Kraftaufwand für das Verstemmwerkzeug reduzieren, sodass auch die Gefahr der unzulässigen Verformung des Gehäusewerkstoffs in angrenzende Bereiche des Gehäuses 14 vorteilhaft vermieden wird.

Die Figur 3 zeigt in einem Längsschnitt eine bevorzugte Ausführungsform des Verschlusskörpers 6 als Ventilhülse zur Aufnahme von Bauteilen eines elektromagnetischen Ventiltriebs. Hierzu weist der zweiteilige Verschlusskörper 6 in seinem Unterteil quer und längs verlaufenden Einlass- und Auslassöffnungen 10, 11 auf, die vorzugsweise durch Stanzen oder Prägen hergestellt sind. Das Unterteil des Verschlusskörpers 6 ist in vorliegendem Ausführungsbeispiel besonders kostengünstig durch Tiefziehen von Dünnblech und das Oberteil durch Kaltschlagen oder Fließpressen aus einem Stahlrohling hergestellt. Ferner zeigt die Figur 3 den bereits in Figur 2 abschnittsweise dargestellten Verstemmstempel 9 oberhalb zur Ventilhülse vor dem Verstemmen. In einem Axialabstand zur Schneidkante 13 ist am Umfang des Verstemmstempels 9 eine nach oben kegelförmig erweiterte Fläche ausgebildet, welche den Endanschlag 12 darstellt, der nach dem Abschluss des kontinuierlichen Einpressvorgangs mit dem Erreichen der Endposition des Verstemmstempels 9 in der Aufnahmebohrung 1 an der Zentrierkegelfläche 3 anliegt.

### Bezugszeichenliste

| | |
|---|---|
| 1 | Aufnahmebohrung |
| 2 | Verstemmstelle |
| 3 | Zentrierkegelfläche |
| 4 | Bohrungsstufe |
| 5 | Außenkante |
| 6 | Verschlusskörper |
| 7 | Bohrungsstufe |
| 8 | Bund |
| 9 | Verstemmstempel |
| 10 | Einlassöffnung |
| 11 | Auslassöffnung |
| 12 | Endanschlag |
| 13 | Schneidkante |
| 14 | Gehäuse |

## Patentansprüche

1. Verschlussvorrichtung zum Verschließen von druckmittelführenden Kanälen in einem Gehäuse (14), aufweisend das Gehäuse (14) sowie einen rotationssymmetrischen Verschlusskörper (6), der in einer Aufnahmebohrung (1) des Gehäuses (14) befestigt ist, wobei das Gehäuse (14) eine am Umfang des Verschlusskörpers (6) vorgesehene Verstemmstelle (2) aufweist die infolge der plastischen Verdrängung des Gehäusewerkstoffs den Verschlusskörper (6) im Gehäuse (14) unlösbar fixiert, wobei die Aufnahmebohrung (1) zwischen der Verstemmstelle (2) und einer Zentrierkegelfläche (3) einen Übergangsbereich in Form einer ersten Bohrungsstufe (4) aufweist, die durch die plastische verdrängung des Gehäusewerkstoffs in die Aufnahmebohrung (1) vertieft ist, wobei die Verstemmstelle (2) als ein an einem Bund (8) des Verschlusskörpers (6) umlaufender Wulst ausgebildet ist, der durch die Kontur eines hülsenförmigen Verstemmstempels (9) ausgebildet ist, wozu der Gehäusewerkstoff im Anschluss an die erste Bohrungsstufe (4) durch den Verstemmstempel (9) in Richtung auf den Bund (8) sowie in einen Vor der Verstemmung des Gehäusewerkstoffs zwischen dem Verschlusskörper (6) und dem Gehäuse (14) definierten Ringraum der Aufnahmebohrung (1) plastisch verdrängt ist, sodass der Bund (8) zwischen einer weiteren Bohrungsstufe (7) und der wulstförmigen Verstemmstelle (2) form- und kraftschlüssig vom verdrängten Gehäusewerkstoff umschlossen ist, wobei die weitere Bohrungsstufe (7) zur Aufnahme einer Verstemmkraft eine Reaktionsfläche aufweist, die quer zur Aufnahmebohrung (1) verläuft, **dadurch gekennzeichnet, dass** der Bund (8) unmittelbar Zwischen der Reaktionsfläche und dem Whist gehabten ist.

2. Verschlussvorrichtung nach Anspruch 1, **dadurch gekennzeichnet, dass** die Zentrierkegelfläche (3) als trichterförmige Anphasung unmittelbar an einer Außenkante (5) der Aufnahmebohrung (1) au geführt ist.

3. Verschlussvorrichtung nach Anspruch 1, **dadurch gekennzeichnet, dass** der Verschlusskörper (6) als Ventilhülse zur Aufnahme von Bauteilen eines elektromagnetischen Ventiltriebs ausgebildet ist.

4. Verschlussvorrichtung nach Anspruch 3, **dadurch gekennzeichnet, dass** der Verschlusskörper (6) mit quer und längs verlaufenden Einlass- und Auslassöffnungen (10, 11) versehen ist, die vorzugsweise durch Stanzen oder Prägen hergestellt sind.

5. Verschlussvorrichtung nach Anspruch 3, **dadurch gekennzeichnet, dass** der Verschlusskörper (6) durch Tiefziehen von Dünnblech und/oder durch Kaltschlagen oder Fließpressen aus einem Stahlrohling hergestellt ist.

6. Verfahren zur Befestigung einer Verschlussvorrichtung, nach einem der vorhergehenden Ansprüche 1 bis 5, **gekennzeichnet durch** nachfolgende Verfahrensschritte:
- Aufsetzen des Verstemmstempels (9) auf die Zentrierkegelfläche (3) an einer Außenkante der Aufnahmebohrung (1),
- Selbstzentrieren des Verstemmstempels (9) auf der Zentrierkegelfläche (3) zur konzentrischen Ausrichtung des Verstemmstempels (9) in Richtung der Aufnahmebohrung (1)
- Eindringen des Verstemmstempels (9) in den Gehäusewerkstoff und Verdrängen des Gehäusewerkstoffs in Richtung auf den am Umfang des Verschlusskörpers (3) vorgesehenen Bund (8),
- Beenden der Vorschubbewegung des Verstemmstempels (9) in Richtung der Aufnahmebohrung (1) entweder beim Erreichen einer definierten Verstemmkraft oder einer baulich begrenzten Endposition des Verstemmstempels (9) in der Aufnahmebohrung (1).

7. Verfahren nach Anspruch 6, **dadurch gekennzeichnet, dass** am Verstemmstempel (9) ein Endanschlag (12) vorgesehen ist, der beim Erreichen der Endposition des Verstemmstempels (9) an der Zentrierkegelfläche (3) anliegt.

8. Verfahren nach Anspruch 6, **dadurch gekennzeichnet, dass** die Befestigung des Verschlusskörpers (6) in der Aufnahmebohrung (1) mittels des Verstemmstempels (9) in einem kontinuierlichen Einpressvorgang erfolgt.

9. Verfahren nach Anspruch 6, **dadurch gekennzeichnet, dass** der Verstemmstempel (9) als hülsenförmiger Flachstempel mit einer Schneidkante (13) ausgeführt ist, die vor dem Einpressen in die Aufnahmebohrung (1) auf der Zentrierkegelfläche (3) selbstzentrierend gleitet und die zur Ausbildung der Verstemmstelle (2) abschnittweise in Richtung der Bohrungsstufe (4) plastisch mitverformt wird.

## Claims

1. Closing device for closing fluid-carrying ducts in a housing (14), having the housing (14) and a rotationally symmetrical closing element (6), which is fixed in a seating bore (1) of the housing (14), wherein the housing (14) has a calking site (2), which is provided on the circumference of the closing element (6) and which due to the plastic displacement of the housing material permanently fixes the closing element (6) in the housing (14), wherein the seating bore (1), between the calking site (2) and a centering cone face (3), comprises a transitional area in the form of a first bore step (4) which by means of the plastic displacement of the housing material is recessed into the seating bore (1), wherein the calking site (2) is configured as a circumferential bead on a collar (8) of the closing element (6), which bead is formed by the contour of a sleeve-shaped calking punch (9), to which end, adjoining the first bore step (4), the housing material is displaced plastically by the calking punch (9) in the direction of the collar (8) and into an annular space of the seating bore (1), which annular space is defined before the calking of the housing material between the closing element (6) and the housing (14), with the result that the collar (8) is enclosed positively and non-positively by the displaced housing material between a further bore step (7) and the bead-shaped calking site (2), the further bore step (7) having a reaction face for absorbing a calking force, which reaction face extends transversely with respect to the seating bore (1), **characterized in that** the collar (8) is held directly between the reaction face and the bead.

2. Closing device according to Claim 1, **characterized in that** the centering cone face (3), as a funnel-shaped chamfer, is formed directly on an outer edge (5) of the seating bore (1).

3. Closing device according to Claim 1, **characterized in that** the closing element (6) is embodied as a valve sleeve for the seating of components of a solenoid valve drive mechanism.

4. Closing device according to Claim 3, **characterized in that** the closing element (6) is provided with inlet and outlet apertures (10, 11) running transversely and longitudinally, which are preferably produced by punching or stamping.

5. Closing device according to Claim 3, **characterized in that** the closing element (6) is produced by deep-drawing of thin sheet metal and/or from a steel blank by cold upsetting or extrusion.

6. Method for fixing a closing device according to one of the preceding Claims 1 to 5, **characterized by** the following steps:
- application of a calking punch (9) to the centering cone face (3) at an outer edge of the seating bore (1),
- self-centering of the calking punch (9) on the centering cone face (3) for the concentric alignment of the calking punch (9) in the direction of the seating bore (1),
- penetration of the calking punch (9) into the housing material and displacement of the housing material towards the flange (8) provided on the circumference of the closing element (3),
- termination of the feeding movement of the calking punch (9) in the direction of the seating bore (1) on reaching either a defined calking force or a structurally defined limit position of the calking punch (9) in the seating bore (1).

7. Method according to Claim 6, **characterized in that** a limit stop (12), which on reaching the limit position of the calking punch (9) bears against the centering cone face (3), is provided on the calking punch (9).

8. Method according to Claim 6, **characterized in that** the fixing of the closing element (6) in the seating bore (1) is performed by means of the calking punch (9) in one continuous inward pressing operation.

9. Method according to Claim 6, **characterized in that** the calking punch (9) is embodied as a sleeve-shaped flat punch having a cutting edge (13), which slides with self-centering effect on the centering cone face (3), before pressing into the seating bore (1) and which, to form the calking site (2), is also plastically deformed in portions in the direction of the bore step (4).

## Revendications

1. Dispositif de fermeture destiné à fermer des canaux conduisant un fluide sous pression dans un boîtier (14), présentant le boîtier (14) ainsi qu'un corps de fermeture à symétrie de révolution (6), qui est fixé dans un alésage de réception (1) du boîtier (14), le boîtier (14) présentant une zone de matage (2) prévue sur la périphérie du corps de fermeture (6), laquelle fixe le corps de fermeture (6) dans le boîtier (14) de manière permanente du fait du refoulement plastique du matériau du boîtier, l'alésage de réception (1) présentant entre la zone de matage (2) et une surface conique de centrage (3) une région de transition sous forme d'un premier étage d'alésage (4) qui est renfoncé dans l'alésage de réception (1) du fait du refoulement plastique du matériau du boîtier, la zone de matage (2) étant réalisée sous forme de bourrelet périphérique sur un épaulement (8) du corps de fermeture (6), lequel bourrelet est réalisé par le contour d'un poinçon de matage en forme de douille (9), et à cet effet le matériau du boîtier étant refoulé plastiquement dans le prolongement du premier étage d'alésage (4) par le poinçon de matage (9) dans la direction de l'épaulement (8) ainsi que dans un espace annulaire de l'alésage de réception (1) défini avant le matage du matériau du boîtier entre le corps de fermeture (6) et le boîtier (14), de telle sorte que l'épaulement (8) soit entouré par engagement par correspondance géométrique et par force par le matériau du boîtier refoulé entre un étage d'alésage supplémentaire (7) et la zone de matage (2) en forme de bourrelet, l'étage d'alésage supplémentaire (7) présentant, pour recevoir une force de matage, une surface de réaction qui s'étend transversalement à l'alésage de réception (1), **caractérisé en ce que** l'épaulement (8) est maintenu directement entre la surface de réaction et le bourrelet.

2. Dispositif de fermeture selon la revendication 1, **caractérisé en ce que** la surface conique de centrage (3) est réalisée sous forme de biseautage en forme d'entonnoir directement contre une arête extérieure (5) de l'alésage de réception (1).

3. Dispositif de fermeture selon la revendication 1, **caractérisé en ce que** le corps de fermeture (6) est réalisé sous forme de douille de soupape pour recevoir des composants d'une commande de soupape électromagnétique.

4. Dispositif de fermeture selon la revendication 3, **caractérisé en ce que** le corps de fermeture (6) est pourvu d'ouvertures d'entrée et de sortie (10, 11) s'étendant transversalement et longitudinalement, qui sont fabriquées de préférence par estampage ou gaufrage.

5. Dispositif de fermeture selon la revendication 3, **caractérisé en ce que** le corps de fermeture (6) est fabriqué par emboutissage profond de tôle mince et/ou par frappe à froid ou par extrusion à partir d'une pièce brute en acier.

6. Procédé de fixation d'un dispositif de fermeture selon l'une quelconque des revendications 1 à 5, **caractérisé par** les étapes de procédé suivantes :
- application du poinçon de matage (9) sur la surface conique de centrage (3) contre une arête extérieure de l'alésage de réception (1),
- auto-centrage du poinçon de matage (9) sur la surface conique de centrage (3) pour l'orientation concentrique du poinçon de matage (9) dans la direction de l'alésage de réception (1),
- pénétration du poinçon de matage (9) dans le matériau du boîtier et refoulement du matériau du boîtier dans la direction de l'épaulement (8) prévu sur la périphérie du corps de fermeture (3),
- achèvement du mouvement d'avance du poinçon de matage (9) dans la direction de l'alésage de réception (1) soit à l'obtention d'une force de matage définie soit à l'obtention d'une position de fin de course limitée par la construction du poinçon de matage (9) dans l'alésage de réception (1).

7. Procédé selon la revendication 6, **caractérisé en ce qu'**une butée de fin de course (12) est prévue sur le poinçon de matage (9), laquelle, à l'obtention de la position de fin de course du poinçon de matage (9), s'applique contre la surface conique de centrage (3).

8. Procédé selon la revendication 6, **caractérisé en ce que** la fixation du corps de fermeture (6) dans l'alésage de réception (1) a lieu au moyen du poinçon de matage (9) dans une opération de pressage continue.

9. Procédé selon la revendication 6, **caractérisé en ce que** le poinçon de matage (9) est réalisé sous forme de poinçon plat en forme de douille avec une arête de coupe (13) qui glisse de manière autocentrée avant le pressage dans l'alésage de réception (1) sur la surface conique de centrage (3) et qui est déformée en même temps plastiquement pour réaliser la zone de matage (2) en partie dans la direction de l'étage d'alésage (4).
